# EUROPEAN PATENT APPLICATION

(11) **EP 4 439 408 A1**
(43) Date of publication of application: **02.10.2024**
(21) Application number: 23166112.5
(22) Date of filing: 31.03.2023
(51) Int. Cl.: G06N 20/00

(54) **METHOD AND DEVICES FOR AUTOMATICALLY TRIGGERING AN AUDIT PROCESS**

(71) Applicant: Helsing GmbH, 81671 Munich (DE)
(72) Inventor: Gendre, Maxime, Munich 81671 (DE); Adams, Maxwell, Munich 81671 (DE); Krah, Moritz, Munich 81671 (DE); Fink, Robert, Munich 81671 (DE); Pfeiffer, Simon, Munich 81671 (DE); Lingemann, Stephanie, Munich 81671 (DE)
(74) Representative: Rummler, Felix

(57) **Abstract**

There is provided a computer implemented method, a platform and a system configured to perform the method, a computer-readable medium and a computer program comprising instructions to carry out the method, the method comprising: monitoring a provenance data structure of one or more algorithms and/or of an artefact generated by one or more algorithms, the provenance data structure comprising provenance data on which the one or more algorithms and/or the artefact are based and, preferably, the one or more algorithms and/or the artefact; determining a change of the monitored provenance data structure; and automatically triggering an audit process for the one or more algorithms and/or the artefact based on the determined change of the monitored provenance data structure.

## Description

### BACKGROUND OF THE INVENTION

Algorithms, such as those representing an artificial intelligence, AI, model, may be subject to an audit process. Auditing and re-auditing AI models is of particular importance in rapidly changing systems or system environments. For example, in the presence of new data, such as training, validation or evaluation data, an audit process or re-audit process of the AI model ensures, e.g. checks and/or conforms, that the model works reliably, in particular that a specific capability of the AI model is maintained. For example, if the model or a new (version of the) model is intended to be used in a new or changed field of application, or if its training, validation or evaluation data changed, a (re-)audit process is indispensable to ensure continued reliable model performance. That holds particularly true for areas of application with high safety requirements, such as military applications.

Within a (re-)audit process, the AI model may for example be (re-)validated, (re-)evaluated and/or otherwise reviewed. Also, the data underlying the AI model may be reviewed, which may inter alia include the code for model training, or the infrastructure on which the model was trained, etc. Such audit processes are often context-specific (e.g., depend on model types or use cases, i.e. the application areas), multi-dimensional (e.g., underlying data, such as training data, and development standards and methods need to be audited as well as the AI model itself), and require collaboration across multiple users, platforms or entities (e.g., engineers, auditors, and regulators). Due to the complexity of audit processes, common audit processes are at least in part managed and/or performed manually, thereby being slow, non-transparent and error-prone.

The present invention aims for method and devices that allow for automated (re-)audit processes that are performed in a more efficient and reliable manner.

### SUMMARY

The present invention is defined by the appended independent claims. Advantageous embodiments are defined in the dependent claims. The present invention provides a computer implemented solution for automatically triggering an audit process for one or more algorithms and/or of an artefact generate by (the) one or more algorithms based on changes determined in a provenance data structure, such as data indicative of a provenance graph comprising an AI model and its provenance data. An audit process of an algorithm and/or the artefact may include auditing specific capabilities of the algorithm and/or the artefact, e.g. the AI model. The defined automated triggering of the audit process results in an increased efficiency and reliability of the audit process. Thereby, auditing of deployed models in (near) real-time is enabled - what is of essential importance, in particular in areas of application with high safety requirements.

According to an embodiment, there is provided a computer implemented method comprising: monitoring a provenance data structure of one or more algorithms and/or of an artefact generate by one or more algorithms, the provenance data structure comprising provenance data on which the one or more algorithms and/or the artefact are based and, preferably, the one or more algorithms and/or the artefact; determining a change of the monitored provenance data structure; automatically triggering an audit process for the one or more algorithms and/or the artefact based on the determined change of the monitored provenance data structure.

The one or more algorithms may be machine learning, ML, algorithms and may represent an artificial intelligence, AI, model. In the following, the terms "AI model", "artefact" and "one or more algorithms" or "one or more ML algorithms" may be used interchangeably.

The artefact generated by one or more algorithms, in particular the above defined one or more algorithms, may be an AI model. Additionally, or alternatively, the artefact may be a file generated by one or more algorithms. The file may be a configuration file, e.g. a deterministic configuration file or function. Additionally, or alternatively, the artefact may be an input (file) for another algorithm. Additionally, or alternatively, the artefact may be an input file for another AI model, configuration file and/or system or platform.

More generally, the artefact may be an artefact generated by one or more algorithms and having one or more (provenance) data-derived capabilities. In other words, based on provenance data of the artefact and/or the one or more algorithms that generated the artefact, the artefact provides certain data-based or data-derived capabilities.

In particular, the artefact may provide specific output data based on input data. In another example, the artefact may output process indicators based on input data, thereby enabling other algorithms or systems to perform specific tasks/processes.

The change of the provenance data structure may include a change of the Al model. A change of the AI model may include the creation of a new version of the AI model and/or a change of metadata of the AI model. Alternatively, or additionally, the change of the provenance data structure may include a change of provenance data. For example, new or updated provenance data and/or metadata of the provenance data may be created, e.g. uploaded to a system performing the described method.

Generally, the AI model depends or is based on the provenance data. The provenance data may include datasets on which the AI model is based. For example, the provenance data may include training, validation and/or evaluation data. Alternatively, or additionally, the provenance data a may include previous versions and/or code of the AI model. The provenance data structure may include processing pipelines between the AI model and the provenance data, in particular between different parts of provenance data. For example, the provenance data and/or the provenance data structure, in particular the processing pipelines, may include (an indication of) an infrastructure on which the provenance data was used or from which it was derived/received. In other words, the provenance data structure may indicate the relation between the AI model and the provenance data. Put yet another way, the provenance data structure may include a provenance graph indicating a dependency of, or a relationship between, the AI model and the provenance data on which the AI model is based.

By automatically triggering the audit process for the AI model based on a monitored change of the provenance data structure of the AI model, an automated audit process decision making is provided that can be (automatically) adapted to the AI model and its underlying provenance data structure. In that manner, a reliable and efficient audit process is enabled that reduces or eliminates the need for manual intervention.

According to an embodiment, the method further comprises: determining one or more characteristics of the provenance data structure, in particular wherein the one or more characteristics comprise, and/or are indicated by, metadata of the provenance data structure; wherein automatically triggering the audit process for the one or more algorithms and/or the artefact is based on the determined characteristics, in particular of changed and/or unchanged determined characteristics.

The characteristics of the provenance data structure may comprise metadata of the provenance data structure, such as metadata of the AI model or metadata of the provenance data, e.g. about the AI model's and/or provenance data's origin system or classification level.

Additionally, or alternatively, the characteristics of the provenance data structure may comprise types of dependencies, processes and/or transformations indicative of a relation between data within the provenance data structure, such as the relation between the AI model and changed data. Additionally, or alternatively, the characteristics of the provenance data structure may comprise metadata and/or content of, in particular ontology used in, the provenance data structure, i.e. the AI model and/or the provenance data and/or metadata thereof.

The metadata of the provenance data structure may include, for example, an area of application of the AI model and/or security levels or classifications of the AI model and/or the provenance data.

Taking into consideration both the determined change within the provenance data structure and the characteristics of the provenance data structure, such as dependencies within the provenance data structure and/or metadata of the provenance data structure, the decision whether or not an audit process is required can be specifically tailored to the (characteristics of the) AI model.

According to an embodiment, the method further comprises: comparing a predetermined set of rules to the determined change and/or the one or more characteristics of the provenance data structure; wherein automatically triggering the audit process is based on the comparison of the predetermined set of rules and the determined change and/or the one or more characteristics.

The set of rules may be associated with, in particular a number or list of (potential), changes (e.g. type of change and/or a content of change) within the or any provenance data structure and/or characteristics of the provenance data structure. For example, the set of rules may be associated with, a number or list of (potential), metadata of the or any provenance data structure.

For example, the set of rules may indicate that an audit process is triggered for every new model version that can be deployed on a specific application, in particular on applications with high security requirements, such as weapon systems. As another example, the set of rules may indicate that an audit process is triggered for every new model version if its training data contains a specify type of data, e.g. images of (subclasses of) military vehicles.

The set of rules may for example be determined based on a user input and/or the one or more characteristics of the provenance data structure. More particularly, a user may be provided with a selection of rules, the selection of rules being based on the characteristics of the provenance data structure, such as AI model and/or provenance data metadata and/or ontology.

The set of rules may be stored on and/or managed by a system performing the above described method. The set of rules may be predetermined to apply to audit processes of a plurality of AI models. Thereby, the efficiency of audit processes may be enhanced, while audit processes remain specifically adapted or adaptable to the AI models being audited.

According to an embodiment, automatically triggering the audit process for the one or more algorithms and/or the artefact comprises: determining a scope of the audit process; and automatically triggering the audit process within the determined scope.

The scope may be determined based on at least one of the determined change or the one or more characteristics of the provenance data structure, preferably in combination with the set of rules.

Determining the scope may include the determination for which capabilities of the one or more algorithms and/or the artefact an audit process is performed. It may be determined that only for a subset of capabilities of the one or more algorithms and/or the artefact an audit process is performed. Additionally, or alternatively, determining the scope may include determining the audit input, e.g., input data used to perform the audit process. It may be determined that only a subset of audit input used for a previous audit process of the one or more algorithms and/or the artefact is used.

According to an embodiment, the method further comprises: automatically determining and/or validating audit input; and using the audit input or a subset of the audit input for the audit process; or triggering an alert event indicating missing or invalid audit input.

Automatically determining the audit input may be based on metadata, provenance data and/or characteristics of the provenance data structure. Validating the audit input may include validating audit indicators and/or threshold values associated with an audit process using the audit input, e.g. as specified by metadata of the audit input or the above mentioned predetermined set of rules. For example, an audit indicator and/or threshold value may indicate the performance (or audit result) of the same AI model's previous version or of other models with the same or a similar capability. If an audit input fails to meet the audit indicator, threshold value and/or metric, e.g., falls below, exceeds, is not equal to and/or does not contain that audit indicator, threshold value and/or metric, an alert may be triggered and/or the audit process may be stopped, e.g. an audit approval may be blocked.

In that manner, it may be taken into account that a model that can be used in safety-critical missions requires audit input fulfilling specific safety requirements. As another example, an updated model version may only require a subset of (previously used) re-audit input.

According to an embodiment, automatically triggering the audit process comprises: automatically triggering a validating and/or evaluating process of the one or more algorithms and/or the artefact; and/or automatically triggering a review process to determine a data compatibility within the provenance data structure, in particular a compatibility of metadata of the provenance data structure.

For example, if a security classification of one of the AI model or the provenance data has changed, it may be checked that different security classifications of the AI model and the provenance data, e.g. training data, are compatible with each other, e.g. are equal. For example, the audit process may comprise a determination whether a training data of a secret model is government-owned.

According to an embodiment, the change of the provenance data structure comprises a change of the provenance data, more particularly an extension or limitation of the provenance data, and/or a change of metadata of the AI model and/or the provenance data.

For example, new training data is added to the provenance data structure and/or metadata indicating the security level of the training data and/or the AI model has been changed.

According to an embodiment, the method further comprises: comparing a result of the triggered audit process to one or more predetermined audit indicators; automatically triggering an alert event based on the comparison of the audit result and the one or more predetermined audit indicators.

The audit indicators may comprise one or more model/algorithm/artefact (performance) threshold values or metrics. Additionally, or alternatively, the audit indicators may comprise requirements derived from the provenance data. For example, the audit indicator may indicate a requirement of specific characteristics or metadata of the provenance data, the algorithm(s), artefact and/or the provenance data structure. More particularly, the audit indicator may indicate the requirement that characteristics or metadata of the provenance data, the algorithm(s), artefact and/or the provenance data structure correspond to each other, e.g. that the algorithm(s)/artefact and the underlying provenance data fulfil the same safety requirements, are accessible by and/or owned by the same entity. If the audit result or output fails to meet the audit indicator, e.g., falls below, exceeds, is not equal to and/or does not contain that indicator, the alert event may be triggered.

For example, the one or more audit indicators may include or be based on a model performance indicator, model performance threshold value and/or audit output of a previous model versions. More particularly, comparing a result of the triggered audit process to one or more predetermined audit indicators may include comparing the result of the audit output to previous audit output (e.g., of a previous model version), preferably to check for regression or to compare/benchmark different models with the same or similar capabilities to/against each other.

Thereby, the automated audit process, in particular the use of audit results can be performed in an efficient and consistent manner.

According to an embodiment, the one or more audit indicators are determined based on user input and/or the provenance data structure, in particular the characteristics of the provenance data structure.

The audit indicators (e.g., thresholds and/or metrics) may be included in the above described set of rules. Additionally, or alternatively, the audit indicators may be determined based on provenance data, such as audit indicators and/or model performance thresholds of previous model versions. Additionally, or alternatively, the audit indicators may be determined based on audit indicators and/or performance thresholds of other models with the same or a similar capability.

According to an embodiment, the method further comprises: creating, and preferably storing, updating and/or forwarding, a record of the audit process and/or the audit result, in particular as metadata of the one or more algorithms and/or the artefact.

In that manner, a review of an AI model, in particular a determination of a suitability of the AI model for a specific application, may be performed based on metadata of the AI model which facilitates the review and/or determination process.

According to another, possibly independent embodiment, there is provided a data processing platform comprising means for carrying out at least one of the above described methods.

According to another, possibly independent embodiment, there is provided a data processing system comprising means for carrying out at least one of the above described methods.

According to another, possibly independent embodiment, there is provided a computer-readable medium comprising instructions which, when executed by a data processing system or platform, in particular the above described platform or the above described system, cause the data processing system to carry out at least one of the above described methods.

According to another, possibly independent embodiment, there is provided a computer program comprising instructions which, when the program is executed by a computer, in particular in particular the above described platform or the above described system, cause the computer to carry out any of the above described methods.

### BRIEF DESCRIPTION OF THE DRAWINGS

The present invention may be better understood from reading the following description of non-limiting embodiments, with reference to the attached drawings, wherein:
- Fig. 1: shows a flowchart of a first method for automatically triggering an audit process for one or more algorithms;
- Fig. 2: shows a flowchart of a second method for processing audit input;
- Fig. 3: shows a flowchart of a third method for processing audit results;
- Fig. 4: Figure 4 shows a data-processing system configured to perform any of the method steps shown in figure 1, 2 and/or 3.

### DETAILLED DESCRIPTION OF THE PREFERRED EMBODIMENTS

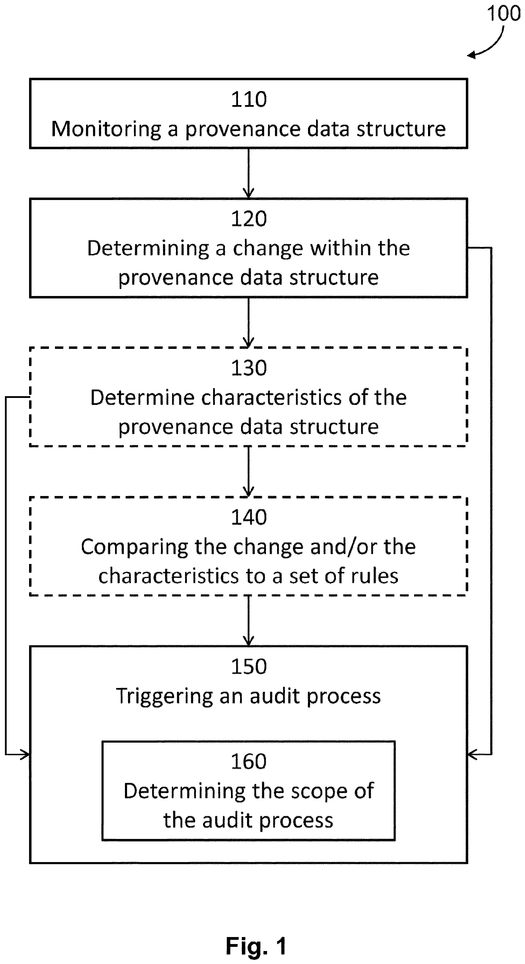

**Figure 1** shows a flowchart of a first method 100 for automatically triggering an audit process for one or more algorithms. In the following description of figures 1 to 4, the one or more algorithms are equated with an AI model. However, the following description euqlly applies to any algorithm or artefact generated by one or more algorithms. In other words, the terms "one or more algorithms", "artefact" and "Al model" may be used interchangeably herein. Triggering an audit process may comprise determining a scope of the audit process and/or determining input data of the audit process, as described in more detail below.

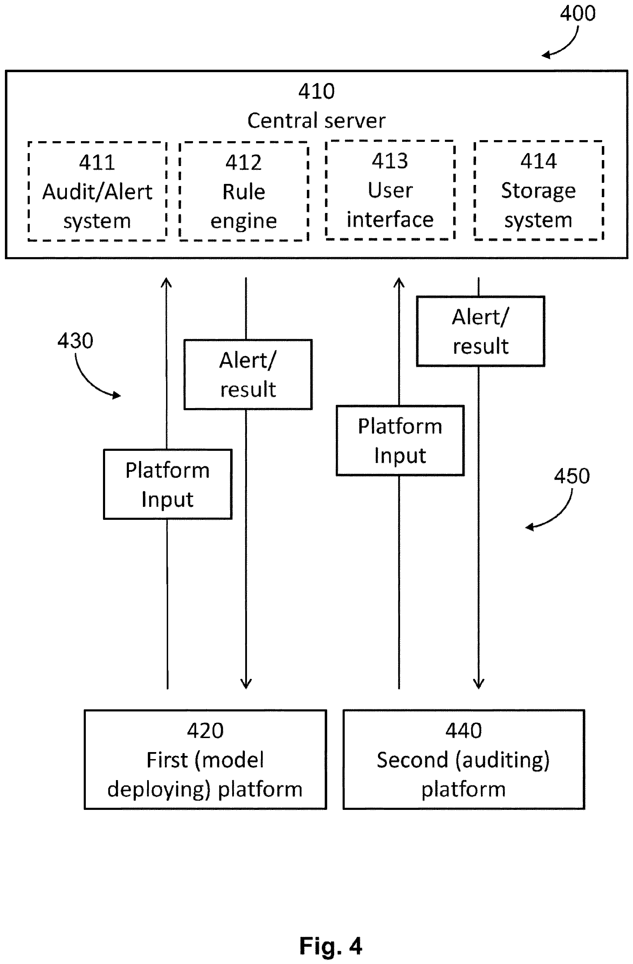

The methods 100, 200 and 300 described with reference to figures 1 to 3 may be performed by a system 400 described with reference to figure 4 or any component of the system 400, as described in more detail below.

The method steps described with reference to figures 1 to 3 may be performed in a different order. Furthermore, where applicable, some of the method steps shown in figures 1 to 3 may be omitted when performing the respective methods.

In a first step 110, a provenance data structure of an AI model is monitored. The provenance data structure comprises provenance data of the AI model. The provenance data comprises datasets on which the AI model is based, for example training data, validating data and/or evaluation data. The provenance data structure may further comprise processing pipelines or processing links between datasets within the provenance data and/or between the provenance data and the AI model. More generally, the provenance data structure may comprise indicators of a relationship between data within the provenance data and/or between the provenance data and the AI model. In one example, the provenance data comprises the AI model and/or previous versions of the AI model.

Additionally, or alternatively, the provenance data structure may comprise metadata of the provenance data structure, the provenance data and/or the AI model. The metadata of the AI model may indicate on which platforms and/or in which application area(s) the AI model is deployed and/or deployable. For example, the metadata of the AI model may indicate audit results of the AI model for a specific application area. Metadata of the provenance data may indicate the content of the provenance data, e.g. the trainings data, the origin of the provenance data, e.g. by which platform the provenance data was created and/or from which platform the provenance data was received. The metadata of the provenance data and/or the AI model may further indicate a security level and/or an owner of the provenance data and/or AI model. The metadata of the AI model and/or the provenance data, e.g. previous versions of the AI model, may further indicate performance values of the (previous version of) AI model and/or other performance values of other AI models (such as previous versions of the AI model or comparable AI models, e.g. AI models of comparable capabilities or AI models used in comparable, i.e. similar, application areas).

In step 120, a change within the monitored provenance data structure is determined. For example, it is determined that training data is added or deleted. More generally, in step 120, it may be determined that the provenance data of the AI model has been expanded or limited. Additionally, or alternatively, in step 120, it may be determined that processing pipelines and/or other dependencies within the provenance data and/or between the provenance data and the AI model have changed, e.g. have been omitted or have been added. Additionally, or alternatively, in step 120, it may be determined that metadata of the provenance data structure, the provenance data and/or the AI model has been amended, such as classification data or security levels of the provenance data/or the AI model.

For example, a user (such as an AI researcher) may upload and/or amend AI models, datasets of the provenance data of the AI model and/or respectively associated metadata to the central server 410 described with reference to fig. 4. Said upload or amendment may be performed directly at the central server 410 via a software development kit (SDK), the user interface, UI, 413 of the central server and/or via the first or second platforms 420, 440 described in more detail below, in particular another UI of the first or second platforms 420, 440. The central server 410 may extract some or all metadata automatically from uploaded AI model and/or provenance data, datasets and/or dataset files (e.g., the layers of a neural network from an ONNX file).

Additionally, or alternatively, the central server 410 may enforce consistent formats for uploading and/or amending the AI model, the datasets of the provenance data and/or the metadata. In that manner, the process for automatically triggering the audit process can be facilitated and/or guided more efficiently.

Based on the determined change, an audit process for the AI model is automatically triggered in step 150. As mentioned above, triggering the audit process may comprise determining the scope of the audit process, in step 160. Triggering the audit process may include triggering a validating and/or evaluating process of the AI model, e.g. if training data and/or an intended use of the AI has changed. Additionally, or alternatively, triggering the audit process may include triggering a review process to determine a data compatibility within the provenance data structure, in particular a compatibility of metadata of the provenance data structure, e.g. of the AI model and the provenance data. Different datasets may be compatible to each other if the same or similar security requirements apply to the datasets, e.g. if access restrictions to the datasets are the same or (substantially) correspond to each other. Additionally, or alternatively, other review processes of data or metadata included in the AI model, the provenance data and/or, more generally, the provenance data structure may be included in the audit process. For example, a class distribution may be reviewed and/or class imbalances may be detected and/or indicated.

In one example, triggering the audit process includes determining an auditor, e.g. a user to which an auditor status is assigned, and/or an audit platform that is to perform the audit process. Determining the auditor and/or the audit platform may be based on reviewing or verifying auditor attributes and/or audit platform attributes. For example, only a subset of auditor and/or audit platforms might have the clearance to audit a secret model. Additionally, or alternatively, triggering the audit process may include assigning (minimal) required permissions to auditors and/or audit platforms (e.g., access to a specific model for evaluation). In that manner, the risk of, e.g. oversharing access manually may be eliminated. Additionally, or alternatively, triggering the audit process may include triggering, e.g. an indication and/or notification to the auditor and/or audit platform, such as about action requirements.

At least one of, in particularly all of, method steps described above, i.e. steps 110, 120, 150 and 160, may be performed by a central server, such as the central server 410 described with reference to figure 4. The change made to the provenance data structure determined in step 120 may has been made by the central server 410 and/or via a user input on (or directed to) the central server 410. Additionally, or alternatively, the change determined in step 120 may has been made by a first platform communicatively coupled to the central server, for example the first platform 420 described with reference to figure 4. The audit process triggered in step 150 (and/or 160) may be performed by the central server 410, by the first platform 420 and/or by a second platform communicatively coupled to the central server 410, e.g. the second platform 440 described with reference to figure 4.

In some embodiments, method 100 comprises step 130 in which one or more characteristics of the provenance data structure are determined. The characteristics of the provenance data structure may include (and/or be indicated by) metadata of the provenance data structure. For example, the characteristics of the provenance data structure may include metadata indicating that a specific type of object is included in (new) training data of the AI model (e.g. images of (subclasses of) military vehicles) and/or that the AI model is intended for a specific use or deployed within a specific application area or on a specific platform (e.g. on weapon systems). More generally, the characteristics of the provenance data structure may include at least one of changed or unchanged metadata, content, shape, structure, origin, classification, security level or intended use of the metadata and/or the AI model. Additionally, or alternatively, characteristics of the provenance data structure may comprise processing links or pipelines (or indications thereof) indicating the relationship within datasets of the provenance structure (i.e. of datasets within the provenance data and/or between datasets of the provenance data and the AI model).

The audit process may be triggered in step 150 based on the determined characteristics of the provenance data structure. For example, if training data is uploaded/updated, the intended use of the AI model and/or the dependency of the AI model on the changed training data may be taken into account when determining whether are not an audit process is triggered.

The method 100 may further comprise step 140 in which the change determined in step 120 and/or the characteristics determined in step 130 are compared to a set of rules. The set of rules may be a predetermined set of rules managed, e.g., by a rule engine of the central server 410, such as the rule engine 412 described with reference to figure 4. For any AI model, the rule engine may determine if a (re-)audit is required The rule engine may further determine the audit scope.

The predetermined set of rules may be determined based on the AI model, the provenance data, metadata of the provenance data structure (provenance data and/or AI model) and/or via a user input, for example via user interface 413 described with reference to figure 4. For example, the predetermined set of rules may determine that a model trained with classified training data requires specific audit input, a model that can be used in safety critical missions requires other audit input and/or that an updated model version may only require a subset of (re-)audit input. More particularly, the predetermined set of rules may determined that an audit process is triggered for every new model version that can be deployed on specific platforms, such as weapon systems. In another example, the predetermined set of rules may determined that an audit process is triggered if its training data has been updated and/or for every new model version if its training data contains images of specific objects, such as (subclasses of) military vehicles.

Additionally, or alternatively, triggering an audit process may be based on a determined change of the AI model and the provenance data of the AI model. For example, a change of an AI model may or may not result in triggering the audit process depending on the provenance data, or more generally on the provenance data structure, of the AI model. Characteristics and/or metadata of the data provenance (structure) and/or dependencies of the AI model on the provenance data (structure) that result in the triggering of the audit process may be indicated by the above-mentioned set of rules.

As a further aspect, determining whether or not, and to what extent, the audit process is triggered may be based on an ontology (e.g. linguistically defined terms) used in the provenance data structure, such as in the provenance data or metadata thereof. For example, an audit process for a (new) AI model (e.g. a new version of the model) may be triggered whenever the model's training data includes images of specific objects, such as military vehicles, which may be indicated by the ontology used in the metadata of the training data.

The rule engine may determine the audit scope. The set of rules may be determined based on the AI model, the provenance data (structure), metadata thereof and/or an ontology thereof (i.e. used therein). Depending on the determined audit scope, required audit input may be determined automatically, e.g. based on AI metadata and/or provenance metadata. In one example, it may be checked that training data of a secret model is government-owned. Additionally, or alternatively, a user may submit required audit input, e.g. metrics (such as model evaluation data) and/or via audit forms (such as input about development methods and standards).

Additionally, or alternatively, a user may upload (and associate) a (re-)audit pipeline, such as a (re-)evaluation pipeline, for (/with) an AI model. When an audit process is triggered, an event may be automatically pushed into an event queue of said pipeline. A user defining an audit pipeline, such as an auditor, e.g. a user of the central server 410 or a user of the second platform 440, may not have access, i.e. may be prevented from accessing, the AI model or other data of the provenance data (structure). That may be particularly relevant in classified environments and cooperating with external auditors.

In one embodiment, the central server, e.g. the audit system 411 of the central server 410, may subscribe to events from this queue and/or trigger model deployment as well as an application programming interface (API) along an edge device, such as the first and/or second platforms 420, 440. The model may be exposed through an API endpoint via an inference server, and a pipeline orchestrator executes the evaluation pipeline calling the model hosted by the inference server. Also, on an edge audit/evaluation device, such as the second auditing platform 440, the pipeline may pull locally the model to make inference.

In one embodiment, the AI model, the provenance data, the provenance data structure and/or respective metadata thereof may be downloaded from the central server 410, e.g. via the user interface 413 and/or a SDK. The download may be performed by the second platform 440. The AI model may be audited, e.g. validated and/or evaluated, using audit input which may or may not be stored at the central server 410 and/or the second platform 440. Similarly, an audit result, such as audit-relevant evaluation metrics, may be uploaded and/or managed at/by the central server 410. The upload/download interfaces may provide both flexibility and consistency if, e.g., auditors want to use evaluation modules on their own infrastructure, such as the second platform 440, but still within the audit process defined by the central server 410.

The set of rules may be determined by the central server, e.g. based on metadata of the provenance data structure, e.g. of the provenance data and/or the AI model. Additionally, or alternatively, the set of rules may be determined based on a user input, e.g. received via the user interface 413 and/or determined based on input received from the first and/or second platform 420, 440. The set of rules may be predetermined to apply to all audit processes, performed e.g. by the central server 410.

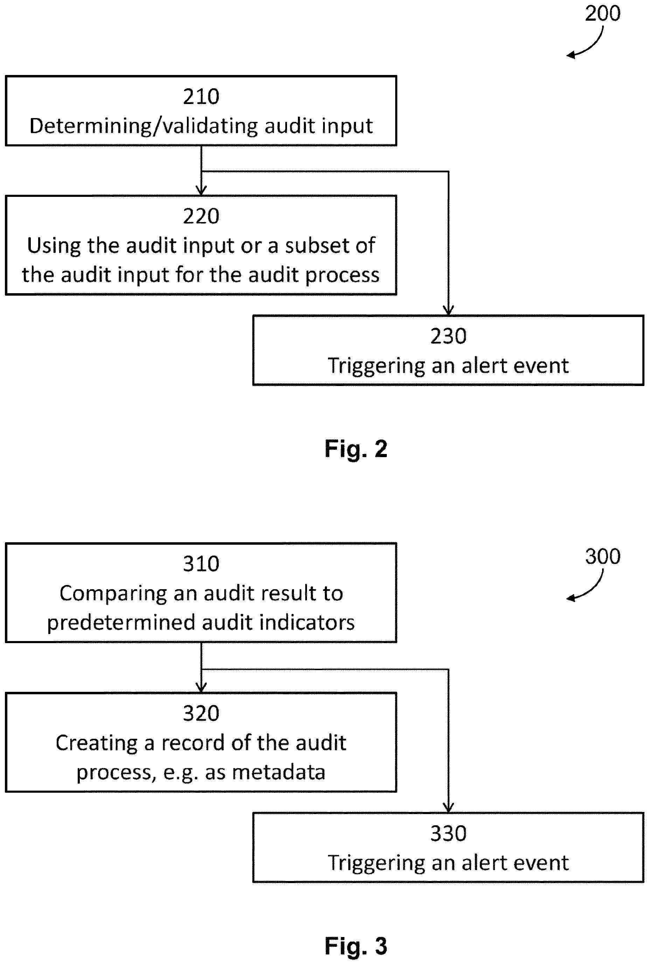

**Figure 2** shows a flowchart of a second method 200 for processing audit input. In step 210, audit input is determined and/or validated. Determining audit input may comprise determining datasets, such as validation and/or evaluation datasets, to be used for the audit process. Audit input may further comprise (indicators of) requirements, such as security requirements, associated with the provenance data structure (e.g. the AI model and/or the provenance data). Additionally, or alternatively, determining audit input may comprise determining audit (performance) indicators. The audit indicators may be used as a metric and/or thresholds for deciding whether or not the audit process is successful.

Determining the audit input may be based on the above described set of rules, the provenance data structure (e.g. the AI model and/or the provenance data) and/or metadata thereof. Determining the audit process may further include determining (additional, e.g. contextual) information provided by a user and/or request said information from a user, in particular information not included in the data provenance structure and/or determined audit input datasets. Said information may include (an indication of) specific standards, methods, and/or tools applied along the model development process. Said information is particularly relevant for AI models developed on third-party infrastructure, such as the second platform 440. Based on the audit requirements determined by the rule engine mentioned above, the central server 410 may expose audit input forms through a UI or SDK to enable engineers and/or auditors to provide all said (additional, e.g. contextual) information required for the audit process.

Validating the audit input may include comparing the audit input to previous audit input, e.g. previous audit input used for auditing a previous version of the AI model, in particular for ensuring non-regression of the AI model and/or avoiding an incompatibility of the AI model and the provenance data. In one example, the above-mentioned rule engine may define target and/or threshold values (e.g. the performance of the same model's previous version or of other models with the same or a similar capability) - in particular for metrics and/or audit forms - to validate audit input automatically.

In step 220, a determined and validated audit input is used for the audit process. A user, e.g. a developer, may be prevented from accessing the audit input, e.g. the validation and/or evaluation datasets used as audit input. In other words, the method 100 and/or 200 may include preventing, or the audit platform (such as the central server 410 and/or the second platform 440) may be configured to prevent, access to the audit input for the user. In one example, a government institution may provide an evaluation dataset for the AI model at the central server 410 but the user developing the AI model cannot access that evaluation dataset. In that manner, the meaningfulness, e.g. relevance or reliability, of the audit result is ensured.

If no (suitable) audit input can be determined and/or the audit input validation process failed, an alert event may be triggered in step 230. Triggering an alert event may be performed by an alerting system of the central server 410, for example alerting system 411 as described with reference to figure 4. Triggering the alert event may comprise transmitting and alert to the first and/or the second platform 420, 440.

**Figure 3** shows a flowchart of a third method 300 for processing audit results. In step 310, a result of the triggered audit process is created and/or compared to predetermined audit indicators. The audit result, e.g. indicating a compatibility of datasets within the provenance data structure (such as a compatibility of datasets of the provenance data and the AI model) and/or a suitability of the AI model for specific, e.g. changed, areas of application, may be created in form of an audit record, in step 320. The audit record may be included in metadata of the provenance data structure, in particular the AI model. Step 320 may further comprise managing, storing, updating and/or forwarding the audit record, e.g. managing, storing and/or updating the audit record at the central server 410, such as in the storage system 414, and/or forwarding the audit process to the first and/or second platform 420, 440. Additionally, or alternatively, the audit record may be uploaded to the central server 410 via the user interface 413, e.g. by the second audit platform 440.

An audit record may include at least one of an audit status (e.g. ready, in progress, requires changes, approved, refused), related resource (e.g., AI model or dataset version), list of auditors (may be determined based on the set of rues mentioned above), list of evaluation metrics (sets), list of input fields (or forms), in particular containing contextual information, audit history, preferably including timestamp of each status update (to keep track of the process), auditor/audit platform comment or action that the auditor/audit platform performed, auditor/audit platform ID (to track the exchanged information in the audit process), a list of target certifications.

In step 330, an alert event is triggered if the audit result is negative, e.g. if the audit process failed, in particular if the audit result does not comply with the predetermined audit indicators. The alert event may comprise transmitting an alert by an entity of a computing system, e.g. the computing system 400, performing the audit process, e.g. central server 410 and/or second platform 440, to other entities of the computing system not performing the audit process. The same applies more generally to any result of the audit process, i.e. positive or negative outcomes of the audit process.

**Figure 4** shows a data-processing system 400 configured to perform any, in particular all, of the method steps described with reference to figures 1 to 3. The system 400 comprises a central server 410. At the central server 410, different AI models and its underlying provenance data structure, in particular its underlying provenance data, may be managed and/or stored, for example in storage system 414.

The central server 410 is communicatively coupled to a plurality of platforms, in the illustrated example to a first platform 420 and a second platform 440. The platforms coupled to the central server may add, delete, amend, or otherwise change AI models and the provenance data structure, in particular the provenance data, of the AI model. Additionally, or alternatively, such processes may performed directly on the central server, e.g. via a user interface 413.

If such a change within the provenance data structure of an AI model is determined, the central server 410 may automatically trigger an audit process for the AI model. Triggering an audit process for the AI model may comprise performing the audit process on the central server 410, e.g. via the audit system 411 and/or triggering the second platform 440 to perform at least a part of the audit process. The second platform 440 may be an auditing platform. Auditing the AI model may be based on a set of rule determined by rule engine 412 of the central server 410.

A first communication channel 430 between the central server 410 and the first platform 420 may be used to transmit audit results or alerts associated with the audit process to the first platform. Further, the first communication channel 430 may be used to transmit platform input from the first platform to the central server 410. Platform input may for example include at least one of provenance data or amendments thereto, AI models or amendments thereto, audit input (such as audit indicators or rules of the set of rule), metadata of the provenance data and/or the AI model and characteristics of the first platform. The first platform 420 may be a platform on which the AI model is deployed. Characteristics of the first platform 420 may include application areas in which the first platform 420 operates and/or technical properties of the first platform 420.

Similarly, a second communication channel 450 between the central server 410 and the second platform 440 may be used to transmit platform input from the second platform 440 to the central server 410 and/or alert events and/or results of the audit process from the central server to the second platform 440. In case the second platform 440, which may be an auditing platform, performs an audit process, input for the audit process may be sent to the second platform 440 from the central server 410 and audit results and/or audit alerts may be sent from the second platform 440 to the central server 410. Audit alerts and/or audit results may then be sent from the central server 410 to the first platform 420. Additionally, or alternatively, a third communication path (not shown) from the second platform 440 to the first platform 420 may be established directly between the first platform 420 and the second platform 440 rather than via the central server 410.

Both the first platform 420 and the second platform 440 may include systems and parts, such as at least one of subsystems 411, 412, 413 or 414, of the central server 410 described above configured to perform any of the, in particular all, method steps described with reference to figures 1 to 3.

## Claims

1. A computer implemented method comprising:
monitoring (110) a provenance data structure of one or more algorithms and/or of an artefact generated by one or more algorithms, the provenance data structure comprising provenance data on which the one or more algorithms and/or the artefact are based and, preferably, the one or more algorithms and/or the artefact;
determining (120) a change of the monitored provenance data structure; and
automatically triggering (150) an audit process for the one or more algorithms and/or the artefact based on the determined change of the monitored provenance data structure.

2. The method of claim 1, further comprising:
determining (130) one or more characteristics of the provenance data structure, in particular wherein the one or more characteristics comprise, and/or are indicated by, metadata of the provenance data structure;
wherein automatically triggering (150) the audit process for the one or more algorithms and/or the artefact is based on the determined characteristics, in particular of changed and/or unchanged determined characteristics.

3. The method of any preceding claim, further comprising:
comparing (140) a predetermined set of rules to the determined change and/or the one or more characteristics of the provenance data structure;
wherein automatically triggering (150) the audit process is based on the comparison of the predetermined set of rules and the determined change and/or the one or more characteristics.

4. The method of any preceding claim, wherein automatically triggering (150) the audit process for the one or more algorithms and/or the artefact comprises:
determining (160) a scope of the audit process; and
automatically triggering (150) the audit process within the determined scope.

5. The method of any preceding claim, further comprising:
automatically determining and/or validating (210) audit input; and
using (220) the audit input or a subset of the audit input for the audit process; or
triggering (230) an alert event indicating missing or invalid audit input.

6. The method of any preceding claim, wherein automatically triggering (150) the audit process comprises:
automatically triggering a validating and/or evaluating process of the one or more algorithms and/or the artefact; and/or
automatically triggering a review process to determine a data compatibility within the provenance data structure, in particular a compatibility of metadata of the provenance data structure.

7. The method of any preceding claim, wherein the change of the provenance data structure comprises a change of the provenance data, more particularly an extension or limitation of the provenance data, and/or a change of metadata of the AI model and/or the provenance data.

8. The method of any preceding claim, further comprising:
comparing (310) a result of the triggered audit process to one or more predetermined audit indicators;
automatically triggering (330) an alert event based on the comparison of the audit result and the one or more predetermined audit indicators.

9. The method of the preceding claim, wherein the one or more audit indicators are determined based on user input and/or the provenance data structure, in particular the characteristics of the provenance data structure.

10. The method of any preceding claim, further comprising:
creating (320), and preferably storing, updating and/or forwarding, a record of the audit process and/or the audit result, in particular as metadata of the one or more algorithms and/or the artefact.

11. A data processing platform (410, 420, 440) comprising means for carrying out the method of any of the preceding claims.

12. A data processing system (400) comprising means for carrying out the method of any of the claims 1-10.

13. A computer-readable medium (414) comprising instructions which, when executed by a data processing system or platform, in particular the platform of claim 11 or the system of claim 12, cause the data processing system to carry out the method of any of the claims 1-10.

14. A computer program comprising instructions which, when the program is executed by a computer, in particular in particular the platform of claim 11 or the system of claim 12, cause the computer to carry out the method of any of claims 1-10.

## Amended claims

### Amended claims in accordance with Rule 137(2) EPC.

1. A computer implemented method comprising:
monitoring (110) a provenance data structure of one or more algorithms and/or of an artefact generated by one or more algorithms, the provenance data structure comprising provenance data on which the one or more algorithms and/or the artefact are based;
determining (120) a change of the monitored provenance data structure; and
automatically triggering (150) an audit process for the one or more algorithms and/or the artefact based on the determined change of the monitored provenance data structure.

2. The method of claim 1, wherein the provenance data structure further comprises the one or more algorithms and/or the artefact.

3. The method of claim 1 or 2, further comprising:
determining (130) one or more characteristics of the provenance data structure, in particular wherein the one or more characteristics comprise, and/or are indicated by, metadata of the provenance data structure;
wherein automatically triggering (150) the audit process for the one or more algorithms and/or the artefact is based on determining (130) changed and/or unchanged characteristics.

4. The method of claim 3, further comprising:
comparing (140) a predetermined set of rules to the determined change and/or the one or more characteristics of the provenance data structure;
wherein automatically triggering (150) the audit process is based on the comparison of the predetermined set of rules and the determined change and/or the one or more characteristics.

5. The method of claim 3 or claim 4, wherein automatically triggering (150) the audit process for the one or more algorithms and/or the artefact comprises:
determining (160) a scope of the audit process, wherein the determining (160) is based on at least one of the determined change or the one or more characteristics of the provenance data structure, preferably in combination with the set of rules; and
automatically triggering (150) the audit process within the determined scope.

6. The method of claim 5, wherein determining (160) the scope further comprises:
automatically determining and/or validating (210) audit input, wherein the audit input is input data used to perform the audit process; and the method further comprising:
using (220) the audit input or a subset of the audit input for the audit process; or
triggering (230) an alert event indicating missing or invalid audit input.

7. The method of any preceding claim, wherein automatically triggering (150) the audit process comprises:
automatically triggering a validating and/or evaluating process of the one or more algorithms and/or the artefact; and/or
automatically triggering a review process to determine a data compatibility within the provenance data structure, in particular a compatibility of metadata of the provenance data structure.

8. The method of any preceding claim, wherein the change of the provenance data structure comprises a change of the provenance data, more particularly an extension or limitation of the provenance data, and/or a change of metadata of the provenance data.

9. The method of any preceding claim, further comprising:
comparing (310) a result of the triggered audit process to one or more predetermined audit indicators;
automatically triggering (330) an alert event based on the comparison of the audit result and the one or more predetermined audit indicators.

10. The method of the preceding claim, wherein the one or more audit indicators are determined based on user input and/or the provenance data structure, in particular the characteristics of the provenance data structure.

11. The method of any preceding claim, further comprising:
creating (320), and preferably storing, updating and/or forwarding, a record of the audit process and/or the audit result, in particular as metadata of the one or more algorithms and/or the artefact.

12. A data processing system (400) comprising means for carrying out the method of any of the claims 1-11.

13. A computer-readable medium (414) comprising instructions which, when executed by a data processing system, in particular the system of claim 12, cause the data processing system to carry out the method of any of the claims 1-11.

14. A computer program comprising instructions which, when the program is executed by a computer, in particular the system of claim 12, cause the computer to carry out the method of any of claims 1-11.
